(19) **Europäisches Patentamt / European Patent Office / Office européen des brevets**

(11) **EP 3 588 445 B1**

(12) **FASCICULE DE BREVET EUROPEEN**

(45) Date de publication et mention de la délivrance du brevet:
**27.08.2025 Bulletin 2025/35**

(21) Numéro de dépôt: **19020400.8**

(22) Date de dépôt: **25.06.2019**

(51) Classification Internationale des Brevets (IPC):
**G06T 15/80** (2011.01)    **G06T 19/20** (2011.01)

(52) Classification Coopérative des Brevets (CPC):
**G06T 15/80; G06T 7/30; G06T 15/503; G06T 19/20;**
G06T 2207/30196

(54) **PROCÉDÉ ET DISPOSITIF POUR LA SIMULATION ET LA VISUALISATION DE MODÈLES SURFACIQUES**

**VERFAHREN UND VORRICHTUNG ZUR SIMULATION UND VISUALISIERUNG VON OBERFLÄCHENMODELLEN**

**METHOD AND DEVICE FOR SIMULATION AND VISUALIZATION OF SURFACE MODELS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2018 FR 1870755**

(43) Date de publication de la demande:
**01.01.2020 Bulletin 2020/01**

(73) Titulaire: **QuantifiCare S.A.**
**06560 Valbonne (FR)**

(72) Inventeur: **THIRION, Jean-Philippe**
**06560 Valbonne (FR)**

(74) Mandataire: **Hautier IP**
**20, rue de la Liberté**
**06000 Nice (FR)**

(56) Documents cités:
**US-A1- 2017 236 327**

• **CEVIDANES L H C ET AL: "Cranial base superimposition for 3-dimensional evaluation of soft-tissue changes", AMERICAN JOURNAL OF ORTHODONTICS AND DENTOFACIAL ORTHOPEDICS, MOSBY, ST. LOUIS, MO, US, vol. 137, no. 4, 1 April 2010 (2010-04-01), pages S120 - S129, XP027022451, ISSN: 0889-5406, [retrieved on 20100408]**

• **KATARÍNA FURMANOVÁ: "MASARYK UNIVERSITY FACULTY OF INFORMATICS Visualization techniques for 3D facial comparison MASTER'S THESIS", 1 January 2015 (2015-01-01), pages 1 - 86, XP055554334, Retrieved from the Internet <URL:https://is.muni.cz/th/374538/fi_m/diploma_thesis.pdf> [retrieved on 20190208]**

• **MATHIAS HUMMEL ET AL: "IRIS: Illustrative Rendering for Integral Surfaces", IEEE TRANSACTIONS ON VISUALIZATION AND COMPUTER GRAPHICS, IEEE SERVICE CENTER, LOS ALAMITOS, CA, US, vol. 16, no. 6, 1 November 2010 (2010-11-01), pages 1319 - 1328, XP011327213, ISSN: 1077-2626, DOI: 10.1109/TVCG.2010.173**

• **THIAGO OLIVEIRA-SANTOS ET AL: "3D Face Reconstruction from 2D Pictures: First Results of a Web-Based Computer Aided System for Aesthetic Procedures", ANNALS OF BIOMEDICAL ENGINEERING, vol. 41, no. 5, 15 January 2013 (2013-01-15), New York, pages 952 - 966, XP055557765, ISSN: 0090-6964, DOI: 10.1007/s10439-013-0744-3**

• **KLOSOWSKI J T ET AL: "Rendering on a budget: a framework for time-critical rendering", VISUALIZATION '99. PROCEEDINGS SAN FRANCISCO, CA, USA 24-29 OCT. 1999, IEEE, PISCATAWAY, NJ, USA, 29 October 1999 (1999-10-29), pages 115 - 516, XP031385533, ISBN: 978-0-7803-5897-3**

- **CASS EVERITT: "One Pass Silhouette Rendering with GeForce and GeForce2", NVIDIA CORPORATION WHITE PAPER, 1 January 2000 (2000-01-01), XP055010981**
- **SILVA S ET AL: "PolyMeCo-An integrated environment for polygonal mesh analysis and comparison", COMPUTERS AND GRAPHICS, ELSEVIER, GB, vol. 33, no. 2, 1 April 2009 (2009-04-01), pages 181 - 191, XP026034182, ISSN: 0097-8493, [retrieved on 20081017], DOI: 10.1016/J.CAG.2008.09.014**

## Description

La présente invention concerne un procédé et un dispositif pour la visualisation et la comparaison de deux modèles surfaciques en trois dimensions représentant les surfaces de deux états d'un même sujet anatomique.

## ARRIÈRE-PLAN TECHNOLOGIQUE

Le suivi de l'évolution des formes d'un sujet ou d'un patient intéresse au plus haut point les spécialistes de l'esthétique ou de la chirurgie plastique.

Des techniques d'acquisition et de reconstruction en 3D existent pour capturer des modèles surfaciques définissant les formes d'un sujet. Il peut s'agir de mesurer la surface du sujet à des instants successifs afin de pouvoir mettre en évidence un traitement, comme par exemple un traitement à base d'acide hyaluronique destiné à donner du volume sous-cutané (joue, sillions nasogénien, lèvres...), ou encore de simuler ou évaluer la pose de prothèses comme des prothèses mammaires. Il peut s'agir également de traitements destinés à enlever du volume comme une liposuccion ou un traitement non-chirurgical de réduction de graisse. Il peut aussi s'agir d'avant-après de chirurgie maxillo-faciale, rhinoplastie ou autre traitement à but chirurgical, thérapeutique ou esthétique.

Le même besoin de représentation et de comparaison avant-après existe dans le cas de données virtuelles obtenues après simulation où il convient de comparer un état de base avec un résultat simulé attendu après opération.

Dans le cas de données réelles avant-après, il convient d'appliquer aux modèles surfaciques 3D des techniques de mise en correspondance de surface afin de pouvoir ramener les deux modèles surfaciques à comparer dans une géométrie commune, au contraire du cas de la simulation où l'après simulation est naturellement situé dans la même géométrie que le sujet initial et pour lequel aucune mise en correspondance des deux modèles surfaciques n'est nécessaire avant visualisation commune.

Des méthodes de visualisation existent pour pouvoir comparer une paire ou plus de ces modèles surfaciques 3D. La méthode la plus simple consiste à disposer les deux modèles surfaciques à comparer l'un à côté de l'autre et à les déplacer dans l'espace virtuel, ou à contrario déplacer la caméra virtuelle par rapport aux deux modèles surfaciques, de manière synchronisée.

Une autre méthode consiste à représenter alternativement les deux modèles surfaciques au même emplacement virtuel et à faire alterner les deux représentations plus ou moins rapidement, afin d'apprécier les différences par persistance rétinienne.

Une autre méthode encore consiste à colorer la surface de l'un des deux modèles surfaciques avec une information de couleur en relation avec la distance résiduelle existant entre les deux modèles surfaciques en ce point après mise en correspondance. On obtient ainsi une « carte d'élévation » permettant de rendre compte de la position relative des deux surfaces et de leur éloignement. Une méthode de rendu consiste par exemple à colorer la surface d'un rouge de plus en plus soutenu lorsque le second modèle surfacique est plus rapproché du centre optique de la caméra virtuelle par rapport au premier modèles surfacique et d'un bleu de plus en plus soutenu lorsque le second modèle surfacique est plus éloigné de cette caméra par rapport au premier modèle surfacique.

On peut trouver une telle représentation page 5, dans K. Furmanova, Master' s thesis, Masaryk University, Faculty of Informatics, Brno, Spring 2015 (sur Internet URL:https://is.muni.cz/th/374538/fi_m/diploma_thesis.pdf). Un autre exemple d'utilisation de cartes de distances peut être trouvé page 960, dans Olivera-Santos et al. "3D Face Reconstruction from 2D Pictures: First Results of a Web-Based Computer Aided System for Aesthetic Procedures", Annals of Biometrical Engineering, vol. 41, n.5, Jan. 15, 2013, pages 952-966.

Enfin, certains systèmes présentent l'une ou l'autre surface des modèles surfaciques comparés « en transparence » les deux modèles surfaciques sont alors rendus de manière traditionnelle et composés ensemble au moyen d'une formule de composition, par exemple linéaire, pouvant ou non prendre en compte les parties cachées. Cette fonctionnalité de transparence est réalisable au moyen d'opérations simples réalisées en utilisant une carte graphique et un ordinateur moderne. Des exemples de telles représentations peuvent être trouvée dansCevidanes et al, ~cranial base superimposition for 3-dimensional evaluation of soft-tissue changes", American Journal of Orthodonties and Dentofacial Orthopedies, vol. 137, n. 4, April 2010, pages 120-129.

Bien qu'une telle transparence permette de présenter de manière conjointe les deux modèles surfaciques, il est parfois ardu de réussir à distinguer ce qui appartient à l'un ou l'autre modèle et les détails des deux modèles se mélangent parfois en transparence avec trop de complexité, ce qui empêche une bonne interprétation des différences qui existent entre les deux modèles surfaciques. Différentes méthodes basées sur la transparence sont explorées de façon systématique par K. Furmanova (déjà cité). La transparence est utilisée pour représenter la distance existant entre les deux surfaces, en représentant les surfaces en transparence et en utilisant des valeurs d'opacité dépendant de la distance séparant les deux surfaces - plus la distance étant longue et plus l'opacité étant importante. Il est noté dans Furmanova que cette opacité peut être « modulée » par différentes fonctions dépendant de l'orientation de la surface, mais principalement, plus la distance entre les deux surfaces est importante et plus l'opacité est augmentée. Le but dans Furmanova est de fournir des indices visuels en tout point des surfaces des différences existant entre les deux modèles comparés. Cependant, comme il peut être constaté dans toutes les représentations présentées dans Furmanova, 1' interprétation visuelle de telles représentations reste très complexe.

Le but de la présente invention est de remédier à ce problème d'interprétation au moyen d'une représentation ressemblant à de la transparence mais permettant une bien meilleure visualisation de la différence, notamment au niveau des parties tangentielles des modèles surfaciques, afin de conduire à une interprétation claire des différences entre les deux modèles surfaciques en simplifiant à l'extrême la représentation de l'un des deux modèles surfaciques. Cette invention privilégie de faire ressortir la silhouette, encore appelée « limbes », de 1' un des deux modèles surfaciques dans la visualisation, c'est-à-dire les parties de ce modèle pour lesquelles la surface est la plus tangente à la direction de prise de vue. Des représentations privilégiant les silhouettes ou limbes, afin de comprendre la forme de surfaces très complexes, sont présentées par exemple dans Hummel et al., "IRIS: illustrative Rendering for Integral Surfaces", IEEE Transactions on Visualization and Computer Graphies, vol. 16, n. 6, Novembre 2010, pages 1319-1328.

Les méthodes proposées par Hummel sont destinées à représenter un seul objet complexe et non la superposition de deux surfaces acquises dans deux conditions différentes. La présente invention, basée sur la représentation des silhouettes pour l'un des deux modèles, produit une représentation particulièrement astucieuse et agréable à l'oeil, permettant de comparer très efficacement les positions relatives des deux modèles dans ces régions tangentielles à la prise de vue.

Couplé avec la possibilité de déplacer cette combinaison virtuelle des deux modèles, cette visualisation permet alors d'explorer cette différence sur toute la surface du sujet en faisant pivoter, en zoomant et en déplaçant cette représentation commune du sujet.

## RÉSUMÉ DE L'INVENTION

La présente invention présente un procédé et un dispositif pour visualisation et la comparaison d'un premier modèle surfacique et d'un second modèle surfacique en trois dimensions représentant les surfaces d'un même sujet anatomique à deux états différents tels que présentés respectivement dans les revendications 1 et 9.

Selon un exemple non revendiqué, il peut s'agir d'un premier modèle surfacique d'un sujet anatomique ayant été déformé, par exemple en utilisant un outil de simulation de chirurgie afin d'obtenir un second modèle surfacique du même sujet à partir du premier modèle surfacique, auquel cas les deux modèles surfaciques sont directement superposables dans l'espace. Selon la présente invention, il s'agit d'un premier et d'un second modèles surfaciques correspondant à des acquisitions effectuées à des instants différents, et l' on applique un algorithme de mise en correspondance en trois dimensions afin de rendre les deux modèles surfaciques superposables au mieux.

La présente invention consiste à réaliser un premier rendu classique, au moyen d'une camera et d'éclairages virtuelles du premier modèle surfacique et un second rendu, spécifique à l'invention, du second modèle surfacique, puis de mélanger les deux représentations en une seule en utilisant une fonction de mélange de ces deux rendus. Le second rendu spécifique à l'invention privilégiera les limbes du second modèle surfacique en faisant ressortir les parties de la surface tangentielles à la direction de prise de vue virtuelle, comme par exemple un rendu dont l'intensité est proportionnelle à la différence d'angle existant entre la direction de prise de vue et la normale au second modèle surfacique du sujet.

Il faut noter qu'il n'est pas intuitif pour l'homme de l'art d'utiliser ce type de rendu privilégiant les limbes et que la plupart des modèles d'illumination pour la visualisation 3D privilégient au contraire de faire ressortir l'intensité des parties de la surface perpendiculaire à la direction de prise de vue et non tangentielles à celle-ci, comme on peut le voir dans le modèle d'illumination de type Gouraud ou de type Phong.

Pour calculer l'intensité du second rendu, on utilise l'unité moins la valeur absolue du cosinus de l'angle entre la direction de prise de vue et la normale à la surface du second modèle surfacique. Diverses variantes sont proposées concernant la prise en compte des parties cachées sur second modèle surfacique et de l'orientation des faces de ce second modèle surfacique par rapport à la direction de prise de vue. La fonction de mélange des deux rendus utilise l'intensité du second rendu comme coefficient de transparence - ou coefficient « alpha » - afin de mélanger la couleur du premier rendu avec une couleur uniforme.

Des outils de manipulation commune des deux modèles surfaciques sont également proposés afin de permettre à un utilisateur de déplacer ces deux modèles pour observer les zones où la direction de prise de vue virtuelle est tangente au sujet, afin de mieux apprécier les différences de position entre les surfaces des deux modèles surfaciques examinés.

L'un de ces outils inclue la possibilité de visualiser côte à côte, d'une part, une représentation commune du premier modèle surfacique rendu avec la première méthode de rendu et du second modèle surfacique rendu avec la seconde méthode de rendu, et d'autre part, une représentation commune du premier modèle surfacique rendu avec la seconde méthode de rendu et du second modèle surfacique rendu avec la première méthode de rendu, afin de pouvoir mieux apprécier les ajouts et les retraits de volumes existants entre les deux modèles surfacique de ce sujet.

On comprendra que la même technique de représentation permettra la visualisation conjointe de plusieurs modèles surfaciques utilisant un rendu classique avec plusieurs modèles surfaciques utilisant le rendu spécifique selon l'invention.

Enfin, un dispositif est décrit, utilisant un système d'acquisition de surfaces 3D et des moyens de calculs permettant la visualisation commune de représentation de deux modèles surfaciques d'un même sujet et utilisant le procédé suivant l'invention.

Cette invention se distingue de l'état de l'art qui consiste à mélanger en transparence deux rendus classiques de deux modèles surfaciques, comme c'est le cas pour Cevidanes et al., ou la représentation de cartes de distance comme dans Olivera-Santos et al. Elle n'est pas intuitive car elle fait ressortir les limbes au contraire des faces perpendiculaires à la direction de visée. Elle n'utilise pas un algorithme de transparence basée sur l'opacité de la matière traversée ou le changement de couleur des surfaces dépendant de la distance entre les deux surfaces examinées comme dans Furmanova, car l'intention n'est pas de représenter dans une seule vue la distance qui sépare ces deux surfaces pour tous les points de cette surface.

Au contraire, la seconde représentation de surface, qui est utilisée pour la visualisation est épurée du maximum de détail de surfaces dans un mode qui peut se rapprocher des représentations de Hummel et al. mis au point pour une seule surface, mais va beaucoup plus loin encore dans la représentation, en se concentrant uniquement sur les silhouettes ou limbes du second modèle surfacique, dans le but d'empêcher toute mauvaise interprétation et de présenter la différence entre les deux surfaces comparées uniquement aux endroits de l'espace où ces surfaces sont tangentielles à l'axe de prise de vue, ce qui constitue un progrès dans l'état de l'art relative à la comparaison visuelle de deux surfaces d'un même sujet.

Enfin, elle n'est pas du domaine de l'abstraction car elle repose sur des représentations informatiques en trois dimensions de surfaces obtenues par mesure à partir d'un sujet réel, pouvant être composées de milliers, voire de millions d'unités de surface, qui dépassent en précision la capacité humaine à représenter une forme anatomique sous la forme de dessin ou de peinture et vise à améliorer l'état de l'art dans le domaine de la visualisation de surfaces en trois dimensions de sujets anatomiques.

INTRODUCTION DES FIGURES

Les dessins annexés illustrent l'invention :

La figure 1 présente une vue superposée de deux modèles surfaciques d'un sujet, avec direction d'observation.
La figure 2 présente plus précisément l'angle existant entre la direction de prise de vue virtuelle et la normale au second modèle surfacique.
La figure 3 présente un algorithme de visibilité utilisant une technique de type « z-buffer » ou de type lancer de rayon.

La figure 4 présente un modèle d'illumination de surface basé sur le « modèle de Phong ».
La figure 5 présente une image de rendu superposé de deux modèles surfaciques selon l'invention après mise en correspondance, d'un vrai sujet réel avant-après (en niveau de gris).
La figure 6 présente un détail de l'image de la figure Fig.5, permettant d'apprécier plus précisément l'effet de transparence et la perception des différences de volumes.
La figure 7 présente une variante de présentation suivant l'invention présentant deux fois une représentation conjointe des modèles à comparer, à gauche avec rendu des limbes du modèle « après » sur l'« avant » et à droite les limbes du modèle « avant » sur l' « après ».

DESCRIPTION DÉTAILLÉE

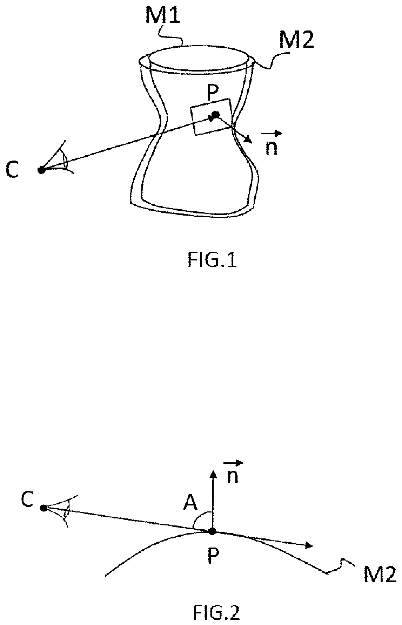

En référence à ces dessins, un procédé de représentation selon l'invention prend en entrée un premier modèle surfacique (M1) et un second modèle surfacique (M2) d'un même sujet afin d'en comparer les formes. Une première méthode de rendu (R1) traditionnelle est utilisée pour fabriquer une première image représentant le modèle surfacique (M1) au moyen d'une caméra virtuelle dont la définition contient la position de son centre optique (C), tel que présenté dans la figure Fig.1.

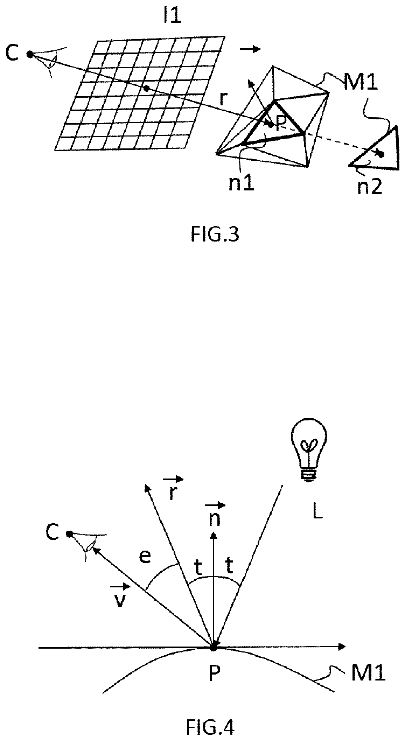

Cette première méthode traditionnelle de rendu pourra comprendre une détermination géométrique de visibilité des surfaces, réalisée au moyen d'un algorithme de visibilité illustré dans la figure Fig.3 de type « z-buffer » ou « deph-buffer », tel que présenté par exemple par Haas et al. dans le brevet US 6,222,551, 24 avril 2001, et consistant à projeter chaque élément de surface, généralement un triangle représentant le modèle (M1), sur une grille régulière (ou image) (11) mémorisant le numéro (n1) de la dernière face visible projetée en chaque point de cette grille et sa distance au centre optique (C) et en cas de superposition, retenant pour ce point uniquement le numéro et la position de la face visible (n1) la plus proche par rapport à toute autre face visible (n2) plus éloignée du centre optique (C) de la camera virtuelle.

Un autre algorithme de visibilité également illustré par la figure Fig.3 pourra être un « lancer de rayon » virtuel (r) à partir du centre optique (C), avec recherche de l'intersection avec l'élément de surface le plus proche de (C) dans la direction de prise de vue (r).

La première méthode de rendu (R1) traditionnel comprendra également un modèle d'illumination de la surface, comme par exemple un algorithme d'illumination de type Gouraud présenté dans Gouraud H., et al., "Continuous Shading of Curved Surfaces", IEEE Transactions on Computers, vol. C-20, No. 6, Jun. 1971, pp. 87-93, ou encore un algorithme d'illumination de type Phong, présenté dans Bui Tuong Phong, "Illumination for Computer Generated Pictures", Graphics and Image Processing, Communications of the ACM, vol. 18, No. 6, Jun. 1975, pp. 311-317., ou tout autre modèle d'illumination.

Ces modèles d'illumination permettent de calculer une couleur finale généralement représentée par ses 3 canaux de couleur Rouge, Verte et Bleue (R,G,B) pour chaque point (P), prenant en compte l'albédo de l'objet, la direction et la distance de sources lumineuses virtuelles et le point considéré (P), et la direction et la distance entre le centre optique (C) et le point considéré (P).

La figure Fig.4 illustre le calcul du modèle d'illumination de Phong en tout point P de la surface du premier modèle surfacique (M1). Il correspond à la somme de trois termes, agissant sur les trois canaux de couleurs rouge, vert et bleu. Le premier terme correspond à un éclairage d'ambiance composé de la multiplication de l'intensité lumineuse d'une lampe virtuelle (L), de l'albedo de la surface et d'un coefficient de réflexion de la lumière propre à la surface. Le second terme est composé de la multiplication d'un coefficient de réflexion diffus, de l'albedo de la surface, de l'intensité lumineuse de la lampe virtuelle (L) et du cosinus de l'angle (t) entre la normal de la surface (n) et la direction incidente de la lampe virtuelle (L) représenté par son rayon réfléchi (r). Le troisième terme est constitué du produit d'un coefficient de réflexion spéculaire, de l'albedo de la surface, de l'intensité lumineuse de la lampe virtuelle (L) et du cosinus de l'angle (e) existant entre la direction reliant le point considéré (P) et le centre optique (C) de la camera virtuelle, et du rayon réfléchi (r) de la direction incidente de la lampe virtuelle (L) par rapport à la normale (n) au premier modèle surfacique (M1) au point (P), ce cosinus étant élevé à une puissance (s) appelée brillance de l'objet. Cette première méthode de rendu (R1) pourra évidemment être plus évoluée afin de produire des images encore plus réalistes, comprenant par exemple l'utilisation de cartes de normale pour rendre des détails fins de surface, l'utilisation de cartes de texture afin d'afficher le grain de peau du sujet réel, ou bien encore des modèles d'illuminations plus poussés incluant la possibilité de trans-luminescence sous-cutanée (algorithme dit de « sub-surface scattering »). Le procédé selon l'invention comprend une seconde méthode de rendu (R2) particulière, privilégiant l'apparence des limbes du second modèle surfacique (M2) et illustré par les figures Fig.1 et Fig.2. Le procédé selon l'invention calcule pour chaque point (P) du second modèle surfacique (M2) l'angle (A) existant entre la direction (CP) définie par le centre optique (C) de la caméra virtuelle et le point (P), et la normale (n) à la surface au point (P). Le procédé définit ensuite une intensité (I2) pour une seconde image représentant le modèle surfacique (M2) pour laquelle l'intensité (I2) est d'autant plus importante que l'angle (A) est proche de l'angle droit.

L'intensité (I2) peut être l'unité moins la valeur absolue du cosinus de l'angle (A) : $I2 = 1 - |\cos(A)|$. Selon un exemple non revendiqué, d'autres fonctions croissantes en fonction de l'angle peuvent être utilisées, comme une formule quadratique : $I2 = (1 - |\cos(A)|)^2$, une élévation à une puissance quelconque : $I2 = (1 - |\cos(A)|)^{\lambda}$, ou toute autre fonction croissante en fonction de l'angle et atteignant son maximum pour l'angle droit.

La fonction de mélange (MEL) est une combinaison de la première intensité (I1) produite par la première méthode de rendu (R1) et de la seconde intensité (I2) produite par la seconde méthode de rendu (R2) ; combinaison qui peut être par exemple une combinaison linéaire des couleurs obtenues par les deux méthodes de rendu.

Une caractéristique particulièrement avantageuse de l'invention consiste à considérer la seconde intensité (I2) comme étant un indice de transparence alpha et utiliser la valeur de cet indice pour pondérer dans la composition (MEL) la première intensité (I1) possiblement représentée par ses trois canaux de couleur rouge (R1), vert (V1), et bleu (B1), et une intensité donnée (Ic) également possiblement représentée par trois valeurs de canaux de couleur (Rc), (Vc) et (Bc). On utilise alors comme composition une pondération de un moins alpha (1-alpha) pour la première intensité (I1) et de alpha pour l'intensité donnée (Ic).

Dans ce dernier cas, les formules de calcul pour obtenir les canaux de couleur (R,G,B) de l'image finalement présentée pourront être :

$$R = (1-alpha) \times R1 + alpha \times Rc$$

$$V = (1-alpha) \times V1 + alpha \times Vc$$

$$B = (1-alpha) \times B1 + alpha \times Bc$$

Afin de simplifier visuellement la représentation finale, il peut être judicieux dans une variante de l'invention de supprimer de la seconde représentation (R2) les faces du second modèle (M2) dont l'orientation va dans le sens de la direction de prise de vue (CP), suivant la formule CP.n > 0.

Une variante comprenant une simplification visuelle supplémentaire de la représentation finale consistera à supprimer de la seconde représentation (R2) les faces du second modèle surfacique (M2) représentées plusieurs fois en un point donné (P) pour ne retenir que la face bien orientée la plus proche du centre optique (C) de la camera virtuelle en chaque point de la seconde image (I2).

Cette variante de simplification visuelle incluant un algorithme de visibilité pourra également être réalisée comme pour le cas d'une représentation classique au moyen d'une technique de type « z-buffer » ou de « lancer de rayon ». Il pourra également être avantageux de calculer un « item buffer » indiquant pour chaque point de la seconde image (I2) l'élément de surface visible le plus proche pour le second modèle surfacique (M2) puis de se servir de la référence à cette surface visible de l'item buffer afin de déterminer la face et donc la seconde valeur d'intensité (I2) de la seconde représentation (R2) en un point donné (P).

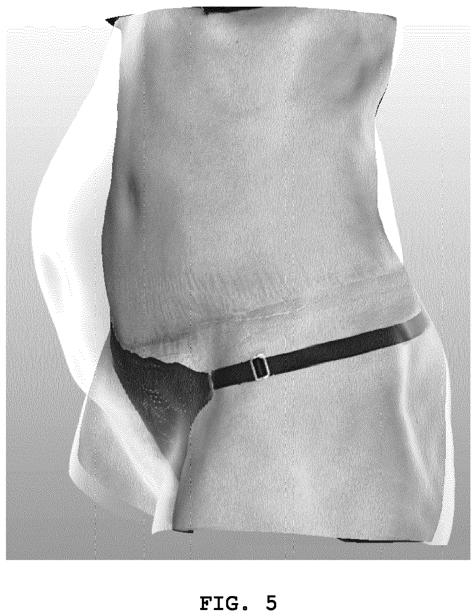

La figure Fig.5 présente un exemple d'image, en dégradé de gris, correspondant à une représentation suivant l'invention d'un premier modèle surfacique (M1) et d'un second modèle surfacique (M2) représentant un même sujet anatomique réel avant opération chirurgicale pour le premier modèle (M1) et après opération chirurgicale pour le second modèle (M2), pour une opération de type « abdominoplastie ».

Ces deux modèles surfaciques (M1) et (M2) ont été mis en correspondance dans l'espace afin d'en rapprocher au mieux les surfaces par une technique de type ICP. La composition finale a été obtenue en utilisant pour la première représentation (R1) un rendu classique de type Phong avec utilisation de texture réelle, et en utilisant pour la seconde représentation (R2) la formule un moins la valeur absolue du cosinus de l'angle. Les faces du second modèle surfacique orientées dans le même sens que la direction de prise de vue virtuelle ont été éliminées, ainsi que les faces plus éloignées que d'autres en utilisant un algorithme de type z-buffer.

La formule de mélange utilisée (MEL) a consisté à utiliser la seconde intensité (I2) du second rendu (R2) comme coefficient de transparence alpha et à composer la couleur de la première représentation (R1), (V1) et (B1) pondérée par un moins alpha et une couleur de blanc uniforme (Rc=1), (Vc=1) et (Bc=1) pondérée par alpha, en chaque point considéré (P).

Pour obtenir une présentation en niveau de gris pour l'image présentée dans la figure Fig.5, et à la seule fin d'une représentation en noir et blanc, une simple moyenne des trois canaux de couleurs a été utilisée : (R + V + B)/3.

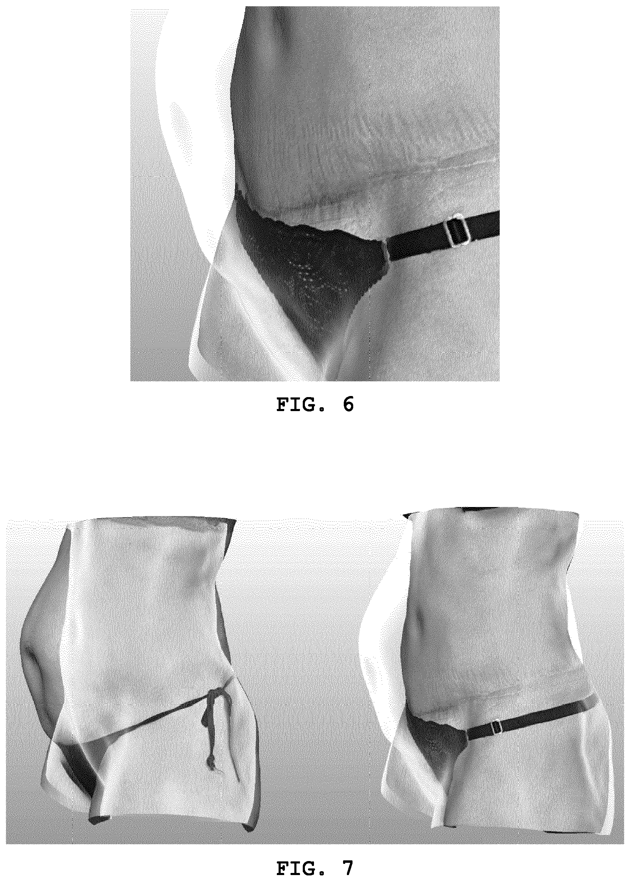

La figure Fig.6 présente un détail de la figure Fig.5 afin de mieux apprécier la simplicité de la représentation et la perception de la différence de position des surfaces du sujet avant et après opération. On pourra remarquer l'absence des faces du second modèle (M2) qui sont orientées dans la direction de la prise de vue, ainsi que l'absence des faces du second modèle (M2) qui serait plus éloignée qu'une autre face de ce second modèle par rapport au centre de la camera virtuelle.

La figure Fig.7 présente une double-représentation des deux modèles surfaciques successifs de ce sujet anatomique réel. Dans la représentation de gauche, la première méthode de rendu (R1) a été utilisée pour le premier modèle surfacique (M1) représentant l'avant et la seconde méthode de rendu (R2) a été utilisée pour le second modèle surfacique (M2) représentant l'après, alors que dans la représentation de droite, la première méthode de rendu (R1) a été utilisée pour le second modèle surfacique (M2) représentant l'après et la seconde méthode de rendu (R2) a été utilisée pour le premier modèle surfacique (M1) représentant l'avant.

Ainsi la figure Fig.7 présente à gauche les limbes de l'après superposées à l'avant et à droite, les limbes de l'avant superposées à l'après.

Les deux représentations de la Fig.7, gauche et droite, peuvent être manipulées simultanément afin de pouvoir être examinées sous tous les angles et avec tous les facteurs de grossissement possible. En effet, les différences de position de surface sont beaucoup plus perceptibles dans les parties tangentielles à la prise de vue de ces représentations, ce qui renforce l'intérêt de la manipulation interactive et synchronisée de ces modèles.

L'invention comprend également un dispositif utilisant un procédé tel que précédemment décrit afin d'acquérir et de présenter à un utilisateur deux modèles surfaciques d'un même sujet et de lui permettre d'en étudier les différences. Ce dispositif inclue :

Des moyens d'acquisition d'au moins un modèle surfacique en trois dimensions d'un sujet anatomique (S).

Des moyens de visualisation graphique d'une représentation conjointe (R12) des deux modèles surfaciques (M1) et (M2) incluant la possibilité de visualiser et de déplacer en 3D une composition (R12) d'un mélange (MEL) des rendus (R1) et (R2) des modèles surfaciques (M1) et (M2).

Les moyens d'acquisition d'au moins un modèle surfacique utilisés peuvent être un appareil d'acquisition 3D de type stéréophotogrammétrie passive tel que présenté par Thirion et al. dans le brevet US 9,621,875 du 11 avril 2017 et constitué d'une optique double permettant l'acquisition d'une paire d'images acquises avec des angles de vues différents. D'autres méthodes d'acquisition 3D peuvent également être envisagés, telles que l'utilisation de méthodes stéréo dites « actives », incluant par exemple la projection de motifs structurés sur la surface examinée et l'utilisation de caméra vidéo pour enregistrer les différentes projections de motifs, ou bien encore des appareils utilisant l'infra-rouge pour mesurer des cartes de profondeurs. De nombreux dispositifs de ce type existent, permettant la reconstruction de surfaces en 3 dimensions, associées ou non à des cartes texturelles et permettant dans tous les cas d'opérer la présente invention.

Des moyens de calculs sont utilisés par ces systèmes stéréo pour reconstruire des représentations de surfaces, correspondant le plus souvent à une triangularisation des surfaces examinées mais pouvant parfois utiliser d'autres représentations : quadrangles, polygones, splines, représentation paramétrique ou autre, pouvant toutes être utilisées par l'invention.

Dans une variante du dispositif selon l'invention, celui-ci comprend en outre des moyens de calcul pour la simulation de déformation de surface tels que des simulations d'opérations chirurgicales, permettant d'obtenir un second modèle surfacique (M2) à partir du premier modèle surfacique (M1) et superposable à celui-ci.

Le dispositif selon l'invention comprend également des moyens de calcul pour mettre en correspondance en trois dimensions les deux modèles surfaciques (M1) et (M2).

Les moyens de calcul et de visualisation seront généralement fournis par un ordinateur programmable, mais il pourra s'agir d'un téléphone intelligent, d'une tablette, d'un serveur ou de tout autre moyen de calcul et de tout autre moyen de représentation graphique associé.

Les méthodes logicielles de mise en correspondance de surface peuvent être basées sur des méthodes de type « ICP » pour « Iterative Closest Point » déterminant alternativement une correspondance entre points représentant les deux modèles surfaciques et une transformation optimale, par exemple obtenue par « moindre carré » à partir des ensembles de points appareillés, mais d'autres techniques de minimisation de distance entre surfaces existent, pouvant inclure ou non la texture associée aux surfaces, l'extraction d'amers anatomiques ou géométriques, ou bien encore la détermination d'invariants géométriques tels que les courbures principales comme présenté par Thirion et al. dans le brevet US 5,499,322 du 12 mars 1996.

Enfin, des moyens de visualisation permettant la réalisation de représentations au moyens de cameras virtuelles, ainsi que la composition en temps réel de plusieurs vues en une seule sont disponibles, en particulier au travers de l'utilisation de cartes graphiques et de protocoles graphiques du type « OpenGL » ou « DirectX ». Ces normes et cartes graphiques incluent en particulier la gestion d'un « canal alpha », qui permet de réaliser des compositions graphiques en utilisant une seconde représentation (R2) comme canal alpha et d'implémenter par exemple une composition du type un moins alpha d'une première représentation (R1) et alpha d'une valeur de couleur uniforme.

La nature de l'invention réside dans la définition d'une seconde représentation (R2) privilégiant la tangence de surface par rapport à la direction de prise de vue et à la composition très particulière et astucieuse qui est proposée des deux représentations afin de faciliter l'interprétation des correspondances ou des différences entre deux représentations de deux modèles surfaciques.

Le procédé et le dispositif suivant l'invention sont particulièrement destinés à permettre la visualisation et la comparaison de au moins deux modèles surfaciques d'un même sujet anatomique afin de mieux comprendre les différences existant entre ces deux modèles surfaciques. Il y aura un intérêt particulier à utiliser la présente invention dans le domaine de la planification ou du suivi d'opération esthétique ou de chirurgie plastique.

## Revendications

**1.** Procédé de visualisation et de comparaison avant-après pour le suivi de l'évolution des formes d'un même sujet (S), au moyen d'une caméra virtuelle (C), de deux modèles surfaciques (M1, M2) en trois dimensions correspondant aux surfaces anatomiques dudit sujet (S) issus d'acquisitions effectuées à des instants différents, dans lequel un algorithme de mise en correspondance en trois dimensions est appliqué aux deux modèles surfaciques (M1, M2) afin d'en rapprocher au mieux les surfaces, dans lequel le premier des deux modèles surfaciques (M1) est représenté par une première méthode de rendu (R1) traditionnelle tandis que le second modèle surfacique (M2) est représenté par une seconde méthode de rendu (R2) privilégiant en intensité les directions de normale de surface perpendiculaires à la direction de prise de vue, dans lequel les deux rendus (R1, R2) sont composés entre eux par une fonction de mélange (MEL) afin de produire une représentation commune (R12) en une seule image des deux modèles surfaciques (M1, M2), ladite fonction de mélange (MEL) consistant à mélanger les intensités des deux rendus (R1, R2) des deux modèles surfaciques (M1, M2) en une seule représentation (R12) de sorte que si l'intensité produite par la seconde méthode de rendu (R2) au point considéré (P) est appelée alpha, alors le rendu final en ce point (P) est égal à un moins alpha multiplié par la couleur obtenue par la première méthode de rendu (R1) en ce point (P), auquel est ajouté la valeur multipliée par alpha d'une couleur fixe, pouvant être un blanc parfait, et dans lequel l'intensité produite par la seconde méthode de rendu (R2) est proportionnelle à la différence entre une unité et la valeur absolue du cosinus de l'angle existant entre la direction de la normale (N) au point (P) considéré de la surface du second modèle surfacique (M2) et la direction de prise de vue (CP) liant le centre optique (C) de la caméra virtuelle et le point considéré (P), ledit procédé comprenant la visualisation de la représentation commune (R12).

**2.** Procédé selon la revendication 1, **caractérisé par le fait qu'**une méthode de mise en correspondance géométrique en trois dimensions des surfaces des deux modèles surfaciques (M1, M2) est calculée et appliquée à l'un des deux modèles surfaciques afin de rapprocher sa position le plus possible de l'autre modèle surfacique.

**3.** Procédé selon les revendications 1 à 2, **caractérisé par le fait que** la seconde méthode de rendu (R2) est telle que le rendu est d'autant plus intense que la normale (N) au point (P) considéré de la surface du second modèle (M2) est perpendiculaire à la direction de prise de vue (CP) liant le centre optique (C) de la caméra virtuelle et le point (P) et que réciproquement le second rendu (R2) est d'autant moins intense que cette normale (N) est parallèle à la direction de prise de vue (CP) liant le centre optique (C) de camera virtuelle et le point considéré (P).

**4.** Procédé selon les revendications 1 à 3, **caractérisé par le fait que** la fonction de mélange (MEL) consiste à mélanger les intensités des deux rendus (R1, R2) des deux modèles surfaciques (M1, M2) en une seule représentation (R12) au moyen d'une combinaison linéaire des intensités produites par les deux méthodes de rendus (R1, R2).

**5.** Procédé selon les revendications 1 à 4, **caractérisé par le fait que** dans la seconde méthode de rendu (R2) sont éliminés les éléments de surface du second modèle surfacique (M2) dont la normale (N) est strictement dirigée dans la même direction que la direction de prise de vue (CP) liant le centre optique (C) de la caméra virtuelle (C) et le point (P) de l'élément de surface considéré.

**6.** Procédé selon les revendications 1 à 5, **caractérisé par le fait que** la fonction de rendu (R2) utilise une carte de visibilité pour éliminer dans le second rendu (R2) les points (P) du second modèle surfacique (M2) pour lesquels il existe un autre point (P') du second modèle surfacique (M2) situé de manière plus proche du centre optique (C) de la caméra que le point (P) considéré.

**7.** Procédé selon les revendications 1 à 6, **caractérisé par le fait que** sont présentés côte à côte deux compositions (R12) et (R21) des deux modèles surfaciques (M1, M2) du même sujet (S), de sorte que la première des deux compositions (R12) présente un premier mélange (MEL1) des intensités produites par la première méthode de rendu (R1) appliquée au premier modèle surfacique (M1) et la seconde méthode de rendu (R2) appliquée au second modèle surfacique (M2) et que la seconde composition (R21) présente un second mélange (MEL2) des intensités produites par la seconde méthode de rendu (R2) appliquée au premier modèle surfacique (M1) et la première méthode de rendu (R1) appliquée au second modèle surfacique (M2).

**8.** Procédé selon la revendication 7, **caractérisé par le fait que** les deux compositions (R12, R21), des deux modèles surfaciques superposés (M1, M2), sont présentées côte à côte et que lorsque la caméra virtuelle (C) est déplacée relativement à l'une des deux compositions, le même déplacement relatif de caméra virtuelle est appliqué à l'autre composition, afin de visualiser sous un seul et même angle les deux compositions présentées côte à côte.

**9.** Dispositif utilisant un procédé de visualisation et de comparaison avant-après pour le suivi de l'évolution des formes d'un même sujet (S) selon l'une des revendications 1 à 8, **caractérisé par le fait qu'**il comprend : des moyens d'acquisition en trois dimensions d'au moins un modèle surfacique d'un sujet anatomique, des moyens de visualisation graphique d'une représentation conjointe (R12) de deux modèles surfaciques (M1, M2) incluant la possibilité de visualiser et de déplacer en 3D une composition (R12) d'au moins un mélange (MEL) des rendus (R1, R2) des deux modèles surfaciques (M1, M2), et des moyens de calcul pour la mise en correspondance en trois dimensions des deux modèles surfaciques (M1, M2).

**10.** Dispositif selon la revendication 9, **caractérisé par le fait qu'**il comprend de plus des moyens de calcul pour simuler et appliquer en trois dimensions des déformations au premier modèle surfacique (M1) afin d'obtenir au moins un modèle surfacique déformé.

**Patentansprüche**

**1.** Vorher-nachher-Visualisierungs- und Vergleichsverfahren zur Verfolgung der Entwicklung der Formen eines gleichen Subjekts (S) anhand einer virtuellen Kamera (C) von zwei Oberflächenmodellen (M1, M2) in drei Dimensionen, die den anatomischen Oberflächen des Subjekts (S) entsprechen, die aus zu unterschiedlichen Zeitpunkten durchgeführten Erfassungen stammen, wobei ein Abgleichsalgorithmus in drei Dimensionen auf die beiden Oberflächenmodelle (M1, M2) angewendet wird, um deren Oberflächen bestmöglich anzunähern, wobei das erste der beiden Oberflächenmodelle (M1) durch eine erste traditionelle Renderingmethode (R1) dargestellt wird, während das zweite Oberflächenmodell (M2) durch eine zweite Renderingmethode (R2) dargestellt wird, bei dem an Intensität die Richtungen einer Oberflächennormalen, senkrecht zur Aufnahmerichtung bevorzugt werden, wobei die beiden Renderings (R1, R2) durch eine Mischfunktion (MEL) miteinander zusammengesetzt sind, um eine gemeinsame Darstellung (R12) in einem einzigen Bild der beiden Oberflächenmodelle (M1, M2) zu erzeugen, wobei die Mischfunktion (MEL) darin besteht, die Intensitäten der beiden Renderings (R1, R2) der beiden Oberflächenmodelle (M1, M2) in einer einzigen Darstellung (R12) zu mischen, sodass, wenn die durch die zweite Renderingmethode (R2) an dem betrachteten Punkt (P) erzeugte Intensität Alpha genannt wird, dann das endgültige Rendering an diesem Punkt (P) gleich einem Minus-Alpha-Faktor, multipliziert mit der Farbe, die durch die erste Renderingmethode (R1) an diesem Punkt (P) erhalten wird, dem der mit Alpha multiplizierte Wert einer festen Farbe, die ein perfektes Weiß sein kann, hinzugefügt wird, ist, und wobei die durch die zweite Renderingmethode (R2) erzeugte Intensität proportional zur Differenz zwischen einer Einheit und dem absoluten Wert des Kosinus des Winkels ist, der zwischen der Richtung der Normalen (N) am betrachteten Punkt (P) der Oberfläche des zweiten Oberflächenmodells (M2) und der Aufnahmerichtung (CP) besteht, die das optische Zentrum (C) der virtuellen Kamera und den betrachteten Punkt (P) verbindet, wobei das Verfahren, das Visualisieren der gemeinsamen Darstellung (R12) umfasst.

2. Verfahren nach Anspruch 1, **dadurch gekennzeichnet, dass** eine Methode zum geometrischen Abgleich in drei Dimensionen der Oberflächen der beiden Oberflächenmodelle (M1, M2) berechnet, und auf eines der beiden Oberflächenmodelle angewendet wird, um dessen Position dem anderen Oberflächenmodell bestmöglich anzunähern.

3. Verfahren nach den Ansprüchen 1 bis 2, **dadurch gekennzeichnet, dass** die zweite Renderingmethode (R2) dergestalt ist, dass das Rendering umso intensiver ist, als die Normale (N) am betrachteten Punkt (P) der Oberfläche des zweiten Modells (M2) senkrecht zur Aufnahmerichtung (CP) steht, die das optische Zentrum (C) der virtuellen Kamera und den Punkt (P) verbindet, und dass umgekehrt das zweite Rendering (R2) umso weniger intensiv ist, als diese Normale (N) parallel zur Aufnahmerichtung (CP) steht, die das optische Zentrum (C) der virtuellen Kamera und den betrachteten Punkt (P) verbindet.

4. Verfahren nach den Ansprüchen 1 bis 3, **dadurch gekennzeichnet, dass** die Mischfunktion (MEL) darin besteht, die Intensitäten der beiden Renderings (R1, R2) der beiden Oberflächenmodelle (M1, M2) anhand einer linearen Kombination der durch die beiden Renderingmethoden (R1, R2) erzeugten Intensitäten in eine einzige Darstellung (R12) zu mischen.

5. Verfahren nach den Ansprüchen 1 bis 4, **dadurch gekennzeichnet, dass** in der zweiten Renderingmethode (R2) die Oberflächenelemente des zweiten Oberflächenmodells (M2) entfernt werden, deren Normale (N) streng in dieselbe Richtung gerichtet ist, wie die Aufnahmerichtung (CP), die das optische Zentrum (C) der virtuellen Kamera (C) und den Punkt (P) des betrachteten Oberflächenelements verbindet.

6. Verfahren nach den Ansprüchen 1 bis 5, **dadurch gekennzeichnet, dass** die Renderingfunktion (R2) eine Sichtbarkeitskarte verwendet, um im zweiten Rendering (R2) die Punkte (P) des zweiten Oberflächenmodells (M2) zu eliminieren, für die ein anderer Punkt (P') des zweiten Oberflächenmodells (M2) existiert, der sich näher am optischen Zentrum (C) der Kamera befindet, als der betrachtete Punkt (P).

7. Verfahren nach den Ansprüchen 1 bis 6, **dadurch**

**gekennzeichnet, dass** zwei Zusammensetzungen (R12) und (R21) der beiden Oberflächenmodelle (M1, M2) desselben Subjekts (S) nebeneinander dargestellt sind, sodass die erste der beiden Zusammensetzungen (R12) eine erste Mischung (MEL1) der durch die erste auf das erste Oberflächenmodell (M1) angewendete Renderingmethode (R1) und die zweite auf das zweite Oberflächenmodell (M2) angewendete Renderingmethode (R2) erzeugten Intensitäten aufweist, und die zweite Zusammensetzung (R21) eine zweite Mischung (MEL2) der Intensitäten aufweist, die durch die zweite auf das erste Oberflächenmodell (M1) angewendete Renderingmethode (R2) und die erste auf das zweite Oberflächenmodell (M2) angewendete Renderingmethode (R1) erzeugt werden.

8. Verfahren nach Anspruch 7, **dadurch gekennzeichnet, dass** die beiden Zusammensetzungen (R12, R21), der beiden überlagerten Oberflächenmodelle (M1, M2) nebeneinander dargestellt werden und dass, wenn die virtuelle Kamera (C) in Bezug zu einer der beiden Zusammensetzungen verlagert wird, die gleiche relative Bewegung der virtuellen Kamera auf die andere Zusammensetzung angewendet wird, um die beiden nebeneinander dargestellten Zusammensetzungen aus einem einzigen und gleichen Winkel zu visualisieren.

9. Vorrichtung, die ein Vorher-Nachher-Visualisierungs- und Vergleichsverfahren zur Verfolgung der Entwicklung der Formen eines gleichen Subjekts (S) nach einem der Ansprüche 1 bis 8 verwendet, **dadurch gekennzeichnet, dass** sie umfasst: Mittel zum Erfassen in drei Dimensionen mindestens eines Oberflächenmodells eines anatomischen Subjekts, Mittel zur grafischen Visualisierung einer gemeinsamen Darstellung (R12) zweier Oberflächenmodelle (M1, M2), welche die Möglichkeit beinhalten, eine Zusammensetzung (R12) mindestens einer Mischung (MEL) der Renderings (R1, R2) der beiden Oberflächenmodelle (M1, M2) in 3D zu visualisieren und zu verlagern, und Berechnungsmittel zum Abgleichen in drei Dimensionen der beiden Oberflächenmodelle (M1, M2).

10. Vorrichtung nach Anspruch 9, **dadurch gekennzeichnet, dass** sie weiter Berechnungsmittel umfasst, um Verformungen am ersten Oberflächenmodell (M1) zu simulieren und in drei Dimensionen anzuwenden, um mindestens ein verformtes Oberflächenmodell zu erhalten.

**Claims**

1. A method for viewing and before-and-after comparison for monitoring the evolution of the shapes of the same subject (S), by means of a virtual camera (C), of two three-dimensional surface models (M1, M2) corresponding to the anatomical surfaces of said subject (S) derived from acquisitions performed at different times, wherein a three-dimensional matching algorithm is applied to the two surface models (M1, M2) in order to best approximate the surfaces, wherein the first one of the two surface models (M1) is represented by a first traditional rendering method (R1) whereas the second surface model (M2) is represented by a second rendering method (R2) favouring in intensity the surface normal directions perpendicular to the viewing direction, wherein the two renders (R1, R2) are composed of each other by a mixing function (MEL) in order to produce a common representation (R12) in one single image of the two surface models (M1, M2), said mixing function (MEL) consisting in mixing the intensities of the two renders (R1, R2) of the two surface models (M1, M2) into one single representation (R12) so that, if the intensity produced by the second rendering method (R2) at the considered point (P) is called alpha, then the final render at this point (P) is equal to one minus alpha multiplied by the colour obtained by the first rendering method (R1) at this point (P), to which is added the value multiplied by alpha of a fixed colour, which may be a perfect white, and wherein the intensity produced by the second rendering method (R2) is proportional to the difference between one unit and the absolute value of the cosine of the angle existing between the direction of the normal (N) to the considered point (P) of the surface of the second surface model (M2) and the viewing direction (CP) connecting the optical centre (C) of the virtual camera and the considered point (P), said method comprising viewing the common representation (R12).

2. The method according to claim 1, **characterised in that** a method for geometrically matching in three dimensions the surfaces of the two surface models (M1, M2) is computed and applied to one of the two surface models in order to bring its position the closest to the other surface model.

3. The method according to claims 1 to 2, **characterised in that** the second rendering method (R2) is such that the render is all the more intense, the more perpendicular the normal (N) at the considered point (P) of the surface of the second model (M2) is to the viewing direction (CP) connecting the optical centre (C) of the virtual camera and the point (P) and **in that**, conversely, the second render (R2) is all the less intense, the more parallel this normal (N) is to the viewing direction (CP) connecting the optical centre (C) of the virtual camera and the considered point (P).

4. The method according to claims 1 to 3, **charac-**

**terised in that** the mixing function (MEL) consists in mixing the intensities of the two renders (R1, R2) of the two surface models (M1, M2) into one single representation (R12) by means of a linear combination of the intensities produced by the two rendering methods (R1, R2).

5. The method according to claims 1 to 4, **characterised in that**, in the second rendering method (R2), the surface elements of the second surface model (M2) are eliminated, the normal (N) of said model being strictly directed in the same direction as the viewing direction (CP) connecting the optical centre (C) of the virtual camera (C) and the point (P) of the considered surface element.

6. The method according to claims 1 to 5, **characterised in that** the rendering function (R2) uses a visibility map to eliminate in the second render (R2) the points (P) of the second surface model (M2) for which there is another point (P') of the second surface model (M2) located closer to the optical centre (C) of the camera than the considered point (P).

7. The method according to claims 1 to 6, **characterised in that** two compositions (R12) and (R21) of the two surface models (M1, M2) of the same subject (S) are presented side-by-side, so that the first one of the two compositions (R12) has a first mixture (MEL1) of the intensities produced by the first rendering method (R1) applied to the first surface model (M1) and the second rendering method (R2) applied to the second surface model (M2), and the second composition (R21) has a second mixture (MEL2) of the intensities produced by the second rendering method (R2) applied to the first surface model (M1) and the first rendering method (R1) applied to the second surface model (M2).

8. The method according to claim 7, **characterised in that** the two compositions (R12, R21) of the two superimposed surface models (M1, M2) are presented side-by-side and that, when the virtual camera (C) is moved relative to one of the two compositions, the same relative virtual camera movement is applied to the other composition, in order to view from one and the same angle the two compositions presented side-by-side.

9. A device using a method for viewing and before-and-after comparison for monitoring the evolution of the shapes of the same subject (S) according to one of claims 1 to 8, **characterised in that** it comprises: means for the three-dimensional acquisition of at least one surface model of an anatomical subject, means for graphically viewing a joint representation (R12) of two surface models (M1, M2) including the possibility of viewing and moving in 3D a composition (R12) of at least one mixture (MEL) of the renders (R1, R2) of the two surface models (M1, M2), and computing means for three-dimensionally matching the two surface models (M1, M2).

10. The device according to claim 9, **characterised in that** it further comprises computing means for simulating and applying in three dimensions deformations to the first surface model (M1) in order to obtain at least one deformed surface model.

FIG.1

FIG.2

FIG.3

FIG.4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6222551 B
- US 9621875 B, Thirion
- US 5499322 A, Thirion

**Littérature non-brevet citée dans la description**

- **K. FURMANOVA**. Master' s thesis. Masaryk University, 2015
- **SANTOS et al.** 3D Face Reconstruction from 2D Pictures: First Results of a Web-Based Computer Aided System for Aesthetic Procedures. *Annals of Biometrical Engineering*, 15 January 2013, vol. 41 (5), 952-966
- **CEVIDANES et al.** cranial base superimposition for 3-dimensional evaluation of soft-tissue changes. *American Journal of Orthodonties and Dentofacial Orthopedies*, April 2010, vol. 137 (4), 120-129
- **HUMMEL et al.** IRIS: illustrative Rendering for Integral Surfaces. *IEEE Transactions on Visualization and Computer Graphies*, November 2010, vol. 16 (6), 1319-1328
- **GOURAUD H. et al.** Continuous Shading of Curved Surfaces. *IEEE Transactions on Computers*, June 1971, vol. 20 (6), 87-93
- **BUI TUONG PHONG**. Illumination for Computer Generated Pictures. *Graphics and Image Processing, Communications of the ACM*, June 1975, vol. 18 (6), 311-317